# EUROPEAN PATENT APPLICATION

(11) **EP 2 786 804 A1**
(43) Date of publication of application: **08.10.2014**
(21) Application number: 12845198.6
(22) Date of filing: 29.10.2012
(51) Int. Cl.: B02B 5/02, B02B 3/00

(54) **PROCESS FOR PRODUCING RICE FROM UNHULLED RICE AND DEVICE THEREFOR**

(30) Priority: 31.10.2011 CN 201110337155
(71) Applicant: Wang, Hongfu, Zhengzhou, Henan 450000 (CN)
(72) Inventor: Wang, Hongfu, Zhengzhou, Henan 450000 (CN)
(74) Representative: Clark, David James
(86) International application number: PCT/CN2012/083643
(87) International publication number: WO 2013/064042

(57) **Abstract**

Disclosed is a process for producing rice from paddy. The process comprises a hulling procedure for brown rice, which includes procedures of dampening, and stirred debranning. The dampening procedure involves using a dampener (13) to add water accounting for 0.5-2.5% of the weight of the brown rice material to the brown rice material, with the water temperature being 10-60°C; and after the dampening procedure, the brown rice is conveyed to the procedure of stirred debranning within 10 min to be processed. During the procedure of stirred debranning, the height of the brown rice is controlled to be 0.3-2m, and a stirrer is employed for stirring; and the linear velocity of the stirrer rod of the stirrer is controlled to be 1-6m/s. The process uses a method of stirred debranning for debranning the brown rice, such that the acting forces on the brown rice grains are relatively small and uniform, thereby improving the removal rate of the hull of the brown rice and reducing the yield rate of broken rice.

## Description

### Field of the Invention

The present invention relates to paddy processing and, more particularly, to a process and device for producing rice from paddy, which uses a stirred debranning stage to replace the prior rice milling stage, especially suited for a production line of producing rice from paddy by husking and debranning.

### Description of the Prior art

A paddy grain is composed of two major parts: glumes (commonly known as rice hulls) and caryopsis (known as brown rice after removing hulls). Caryopsis is composed of three parts: bran coating, endosperm and embryo. The so-called rice processing refers to a process of removing the rice hulls and the bran coating of the paddy to turn it into pure endosperm based rice. Prior paddy processing flow generally includes 3 stages: cleaning, husking (i.e. removing hulls) and separating post-husking materials (including separation of paddy and hulls, and of paddy and brown rice) and rice milling (rice mill is generally used in prior art to mill off the bran coating and germ of brown rice). Some advanced enterprises set up a finished product treating stage (including fine-finishing stage of white rice grading, selection, polishing, etc.) and by-products treating stage (referring to separation of the whole grains, broken kernels and chips from the rice bran) after the rice milling stage. The main product of paddy processing industry is rice (modem enterprises are selling head rice as their major product). The semi-finished product from the rice milling stage is called white rice, and the by-products include broken rice (broken kernels with a length greater than 1/3 of the brown rice kernels produced in rice milling stage), chips (broken kernels with a length smaller than 1/3 of the brown rice kernels produced in rice milling stage), rice bran (a mixture of bran coatings and a small quantity of rice embryos and chips produced in rice milling stage), paddy hull and rice embryo. Output rate and quality of the main products are undoubtedly the most important indicators for a rice milling production line. The output rate of the main products is evaluated with a head rice yield out of brown rice (referring to the percentage of head rice produced during rice milling stage from the brown rice entering the rice milling stage). Rice milling degree is used as an indicator for evaluation of the quality of the main products, which depends mainly on the degree of remaining of bran on the surface of the rice grain, the less the remaining of bran, the higher the milling degree. As brown rice grain has low strength of anti-shearing and anti-bending with the strength along the longitudinal axis direction being 1 to 2 times lower than that along the minor axis direction (as the length of longitudinal axis of brown rice grain is 1.5 to 4 times that of the minor axis thereof), and especially due to the transverse cracks (the industry term known as cracking) caused by dramatic cooldown, heatup or external impact force during growth, harvesting and husking, which lead to a significant reduction in the strength of the brown rice grain, and that the broken rice rate of rice milling from paddy (the percentage of broken rice accounted for milled rice) is far higher than that of grains milling from other cereals. Therefore, the broken rice rate is commonly used to indirectly reflect the yield of the main products. Rice milling mainly uses rice mill to grind out almost all the bran coating of the brown rice. The typical iron roll rice mill is composed of feed device, spiral conveyor, horizontally mounted cylindrical rice screen, cylindrical grinding roller having ribs on excircle thereof and installed in the position of the axis of the screen cylinder, flat-steel-made pressing screen strip (also known as huller blade) for fixing the screen plate, and discharge device, etc. The narrow space between the grinding roller and rice screen is called the whitening chamber. When the rice mill works, spiral conveyor promotes the brown rice into the whitening chamber and forms an average pressure of 200 to 1000g/cm2 (the industry term called whitening pressure). Then the grinding roller rotates to mill and twist the brown rice grains, the ribs arranged on the grinding roller and the huller blade arranged in the whitening chamber forcing the brown rice grains to flip and greatly improving the milling and twisting force, i.e. achieving the object of grinding out the bran coating of the brown rice. As the bran coating of the brown rice is thin with low strength and the grain of the brown rice has a low strength, and furthermore cracking phenomenon frequently occurs, one step of rice milling stage will mostly strip most of the brown rice bran coating, but often with high broken rice rate, so most of the prior art uses 2 to 3 steps of rice milling stage.

The prior paddy processing technique with rice milling has the following defects: (1) Frequent cracking phenomenon due to the defects of structure and properties of rice mill as well as the low intensity of brown rice results in broken rice rate being up to 25% to 40% during rice milling stage. The high broken rice rate is the biggest shortcoming of prior art. (2) The brown rice grains entering the whitening area of the rice mill have to repeatedly withstand high strength of friction or grinding from the grinding roller to take off the bran coating within about 0.4m ongoing distance, so the rice milling stage has problems of high energy consumption, high temperature rise of output product, and the lowered eating quality of finished rice. (3) The structure and properties of the rice mill have destined the conventional production process to inevitably dislodge nutrient-rich aleurone coating, sub-aleurone coating and germ in order to produce high-degree rice, which will cause huge loss of nutrition in finished rice. (4) A small amount of powdered or granular endosperm produced along with the repeated high-intensity grinding and milling in production process mixes into the rice bran, not only reducing the yield, but also seriously affecting the extraction rate of rice bran oil and the value of paddy deep processing.

### Summary of the Invention

According to the foregoing, the present invention aims at providing a rice processing flow and a device therefor using a method of stirred debranning to remove the bran coating of brown rice.

In order to achieve the above object, the present invention adopts the following technical solution:

A process for producing rice from paddy includes a debranning stage of brown rice, comprising dampening and stirred debranning. Brown rice can be obtained by the following conventional stages, such as cleaning (comprising pre-cleaning, winnowing, re-cleaning, magnetic separation and de-stoning), husking, paddy-husk separation and paddy-brown rice separation.

Practically, said stirred debranning stage can be repeated by 1-4 times according to the actual situation of the production line. During the repeating, the stripped bran coating of each time is removed by winnowing or screening.

Further, the dampening stage involves using a dampener to add water accounting for 0.5-2.5% of the weight of the brown rice into the brown rice, with the water temperature being 10-60°C(preferably 26-60°C); and after dampening, the brown rice is conveyed to the stage of stirred debranning within 10 minutes to be processed. During the stage of stirred debranning, the height of the brown rice is controlled to be 0.3-2m, and a stirrer is employed for stirring; and the linear velocity of the stirrer rod of the stirrer is controlled to be 1-6m/s.

Specifically, a process for producing rice from paddy with a flow of pre-cleaning → winnowing → entering raw-paddy bin → re-cleaning → magnetic separation → de-stoning → entering cleaned paddy bin → husking → paddy-husk separation → paddy-brown rice separation → brown rice → dampening → stirred debranning → winnowing or screening → white rice grading → entering finished product bin.

A device for actualizing said process for producing rice from paddy, including the following sequentially connected elements: a pre-cleaning screen, a first vertical suction duct, a first suction winnower, a raw-paddy bin, an oscillating screen, a second vertical suction duct, a magnetic separator, a de-stoner, a cleaned paddy bin, husker, a paddy-husk separator, a paddy-brown rice separating screen, a spray dampener, a stirring debranner, a second suction winnower, a white rice grader and a finished product bin; wherein the upper ports of the first vertical suction duct, the first suction winnower, the second vertical suction duct and the de-stoner are all connected with a first wind net device; the upper port of the paddy-husk separator is connected to a second wind net device, and the upper port of the second suction winnower is connected to a bran-chip separator, and the upper port of the bran-chip separator is connected to a third wind net device; said first, second and third wind net devices are each composed of a fan blower, a centrifugal dust collector and a tripper.

Practically, 1 to 4 units of said stirring debranner and said second suction winnower can be added according to the actual situation of the production line.

The purpose of dampening is to allow water to penetrate the outer coating of the brown rice grain, making it separated from the inner coating or endosperm. The temperature of the water, water addition and dampening time should be paid attention to. The water temperature of dampening is normally controlled to be between 10 °C ∼ 60 °C, generally good debranning effect can be achieved by using water at room temperature, and slightly warming up allows water to penetrate the outer coating faster for easier separation. However, if the temperature is too high, for example higher than 60 °C, not only excessive coal and electricity is consumed, but also the brown rice protein may be damaged and aged due to temperature above 60 □, which undermines the quality of brown rice. Appropriate amount of dampening water should be controlled at 0.5-2.5% of the brown rice's weight. Excessive water during dampening will reduce the strength of the rice grain, causing problems of high broken rice rate, excessive moisture content with finished rice during the debranning stage. To prevent the transfer of moisture absorbed by the bran coating to the endosperm of the brown rice, which will affect the debranning effect, the brown rice should be conveyed to the stirred debranning stage within 10 minutes after dampening.

When implementing the process of the present invention, it is required that the stirring rod linear velocity and material level height within the container is adjusted according to the actual situation of the site, to control the stirring intensity and debranning effect, due to the low intensity of brown rice grain and the frequent cracking phenomenon. The purpose of this requirement is that, under the premise of producing broken rice as few as possible, each step of stirred debranning scrapes and removes portion of brown rice's bran coating, so that the whole debranning stage can scrape more than 95% of brown rice's bran coating with 3 ∼ 4 steps of stirred debranning, producing qualified rice (a very small amount of bran coating can be removed upon additional polishing stage), while the rate of broken in the production process is controlled within 20%. In addition, after the debranning stage, one can also set up treating stage of finished product comprising white rice grading, color selection, elaborative selection and polishing, and sorting stage of by-product comprising bran-chip separation and broken rice sorting.

The stirred debranning stage in the process of the present invention can be implemented by using a stirrer (see Patent CN200910157760.2 for details). The stirrer (herein can also be referred to as the machine for stirred debranning) works by the sharp edge of the scraper to scrape off the bran coating of the brown rice. The principle of stirred debranning is: through keeping the brown rice to a certain height, the lower level of brown rice withstands the pressure from the upper level of brown rice so as to produce gripping force, which is an opposing force with respect to stirring force from the stirring rod, and thereby strip the outer coating of the brown rice. During the stirring, friction effect exists between the materials, which can also scrape off part of the outer coating. One should pay attention to the stirring depth of brown rice, the form and the material of the stirring rod and the linear velocity of the stirring rod during the stirring. The height of brown rice should be controlled to be between 0.3 ∼ 2m. If the height is too low, the gripping force would be not enough to achieve a better debranning result; if the height is too high, the brown rice gripping force would be too strong to increase the energy consumption during stirring, and excessive force making it prone to produce side effect of breakage. The stirring rod can be in the form of a rod inlaid with a blade to scrape the outer coating of the brown rice, and can also be a polyester stick or a grinding wheel to polish brown rice. The linear velocity of the stirring rod shall be maintained at 1-6m/S, adjusted correspondingly according to the different nature of the brown rice to achieve the desired effect and to achieve a high stripping rate of bran coating and low broken rice rate of brown rice. Due to the regular shape of brown rice, there are no obvious pits on brown rice's endosperm except the germ connector. Brown rice's features of thin bran coating, strong water absorbency, low strength and weak binding force between bran coating and endosperm allow the scraper of stirring rod on the stirrer to remove the bran coating easily. Generally three steps are set up for stirred debranning stage, the first two using a stirrer with stirring rods installed with scrapers to debrann, the third using a stirrer with sintered abrasive stirring rod to grind off the residue bran coating and polish the grains, each step cleanup broken rice and bran by screening or winnowing. But due to the low strength of brown rice grain and the frequent cracking phenomenon, if the temperature drastically changes or the dampening is uneven or the moisture content of brown rice is high, the cracking phenomenon can be sharply increased, resulting in a large number of broken rice produced during the processing. Therefore, to adopt production process of the present invention, the dampener must possess the function of dampening the brown rice rapidly and evenly, and the water absorption of the brown rice grain must be controlled to be within the range of 0.5% to 2.5% (specifically, the water addition can be determined according to the actual operation of the production line), and a multi-step stirred debranning stage is preferred to be used, by adjusting the stirring rod linear velocity and material level height within the container to lower the stirring intensity to ensure that each step of stirring can remove portion of bran coating with few broken rice, and then it can be ensured that the effect of the whole process achieves the object of scraping more than 95% bran coating of the brown rice.

In comparison with the prior debranning technology of rice milling, the advantages of the process of the present invention are:
(1) As the scraping force exerted on the brown rice grain is much smaller than the whitening pressure in the prior rice milling technology, the broken rice rate of stirred debranning stage is reduced by 5 to 20 percentage points, which produces very significant economic benefits.
(2) As the scraping force withstood by the brown rice grain is small, the average pressure endured by the brown rice grain in the container accounting for only 4 to 10% of the whitening pressure from the rice mill, the temperature rise of the rice produced in the stirred debranning stage of the present invention is low, reserving the germ and part of aleurone coating, retaining the original rice flavor and nutritional value, and reducing energy consumption during debranning stage by more than 20%.
(3) Most of the germ remains in the grain of rice, which results in less damage to the endosperm and a significant reduction in the proportion of impurities such as starch in rice bran, facilitating the extraction of rice bran oil and further processing of the rice bran.

### Brief Description of the Drawings

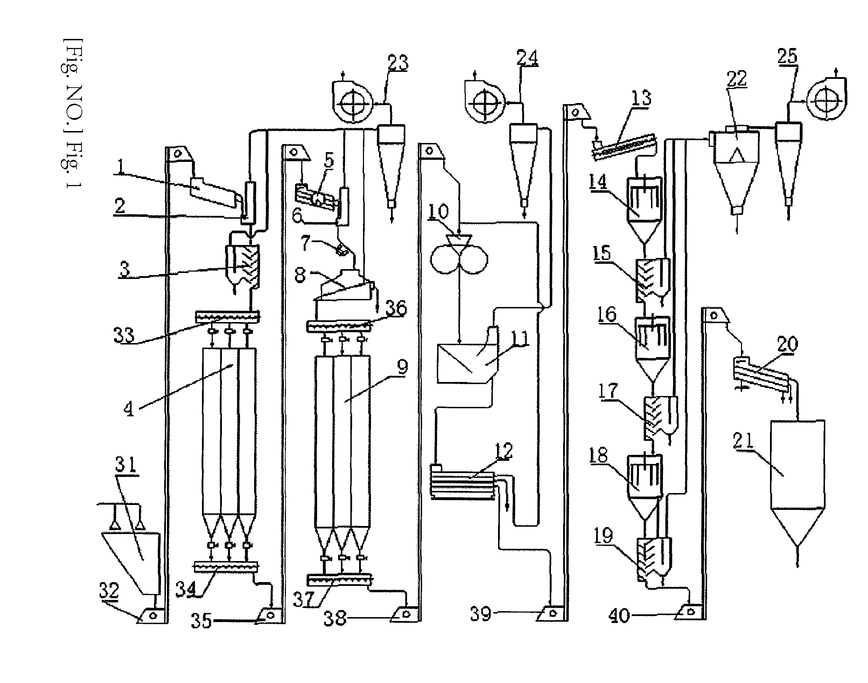

Figure 1 is a schematic flow chart of process for producing rice from paddy according to the present invention.

### Detailed Description of the Preferred Embodiments

In the following, the technical scheme of the present invention is further illustrated in detail by taking a preferable three steps of stirred debranning and winnowing as example, but the scope of the present invention is not thereto limited.

### Example 1

A process for producing rice from paddy, the process flow thereof is pre-cleaning → winnowing → entering raw-paddy bin → re-cleaning → magnetic separation → de-stoning → entering cleaned paddy bin → husking → paddy-husk separation → paddy-brown rice separation → brown rice → dampening → first stirred debranning → winnowing → second stirred debranning → winnowing → third stirred debranning → winnowing → white rice grading → entering finished product bin. The dampening involves using a spray dampener to add water accounting for about 1.0% of the weight of the brown rice, with the water temperature about 35°C; after the dampening, the brown rice is conveyed to the stage of stirred debranning within 10 minutes to be processed. During the stage of stirred debranning, the height of the brown rice is controlled to be 0.3-2m.

A device for implementing the above process for producing rice from paddy (as shown in Fig. 1, where the flow chart can treat 100 tons of paddy per day), includes the following sequentially connected elements: a pre-cleaning screen 1, a first vertical suction duct 2, a first suction winnower 3 (the first suction winnower 3 connected to raw-paddy bin 4 via a first spiral conveyor 33), a raw-paddy bin 4 (the raw-paddy bin 4 connected to a cylindrical oscillating screen 5 via a second spiral conveyor 34, a second hoister 35), an oscillating screen 5, a second vertical suction duct 6, a magnetic separator 7, a de-stoner 8 (the de-stoner 8 connected to a cleaned paddy bin 9 via a third spiral conveyor 36), a cleaned paddy bin 9 (the cleaned paddy bin 9 connected to a husker 10 via a fourth spiral conveyor 37, a third hoister 38), a husker 10, a paddy-husk separator 11, a paddy-brown rice separating screen 12 (the paddy-brown rice separating screen 12 connected to spray dampener 13 via a fourth hoister 39), a spray dampener 13, a first stirring debranner 14, a second suction winnower 15, a second stirring debranner 16, a third suction winnower 17, a third stirring debranner 18, a fourth suction winnower 19 (the fourth suction winnower 19 connected to a white rice grader 20 via a fifth hoister 40), a white rice grader 20 and finished product bin 21; wherein the upper ports of the first vertical suction duct 2, the first suction winnower 3, the second vertical suction duct 6 and the de-stoner 8 are all connected with a first wind net device 23; the upper port of the paddy-husk separator 11 is connected to a second wind net device 24, and the upper port of the second suction winnower 15, the upper port of the third suction winnower 17 and the upper port of the fourth suction winnower 19 are all connected to a bran-chip separator 22, the upper port of the bran-chip separator 22 is connected to a third wind net device 25; the wind net devices 23, 24 and 25 are each composed of a fan blower, a centrifugal dust collector and a tripper. The first wind net device 23 is used for collecting light impurities sucked out during cleaning stage; the second wind net device 24 is used for collecting rice hulls produced during husking and post-husking materials sorting stages; the third wind net device 25 is used for collecting and separating chips and bran produced during stirred debranning stage.

When the production line is in use, first the paddy is put into the unloading pit 31, and via the first hoister 32 enters the pre-cleaning screen 1, the first vertical suction duct 2 and the first suction winnower 3 successively for impurity cleaning, then enters raw-paddy bin 4 after removing large and small impurities and light impurities, and then via the second spiral conveyor 34 and the second hoister 35 enters the cylindrical oscillating screen 5 (removing large and small impurities and light impurities), the second vertical suction duct 6 (removing light impurities), the magnetic separator 7 (removing ferromagnetic impurities) and the de-stoner 8 (removing heavy impurities such as stones) for further impurity removal, after that, enters cleaned paddy bin 9, and via the fourth spiral conveyor 37 and the third hoister 38 enters husker 9 to grind off the rice hulls, then enters paddy-husk separator 11 for separating and removing rice hulls, and then enters the paddy-brown rice separating screen 12 to be separated and obtain the brown rice. The brown rice enters the dampener 13 via the fourth hoister 39 for getting dampened (dampening ratio being about 1.0%, water temperature being 30°C, dampening time being less than 5 minutes), and then enters the first stirring debranner 14, the second suction winnower 15, the second stirring debranner 16, the third suction winnower 17, the third stirring debranner 18 and the fourth suction winnower 19 successively to proceed three steps of stirred debranning to remove the bran coating, which can scrape and remove more than 95% of brown rice's bran coating (scraped bran coating enters bran-chip separator 22 after separated by winnowers 15, 17 and 19 for subsequent separation process). The white rice produced in the debranning stage is sent to the white rice grader 20 for screening and grading, and the finished rice is sent into the finished products bin 21.

The process and device of the present invention used for rice producing have low broken rice rate with low energy consumption and significant economic benefits. Finally it should be noted that the above embodiments are merely used to illustrate but not to limit the technical solution of the present invention. Any equivalent alternatives and modifications or partial replacements carried out without departing from the spirit and scope of the present invention shall be covered within the scope of protection of the present accompanied claims.

## Claims

1. A process for producing rice from paddy, comprising a debranning stage for brown rice, **characterized in that** said debranning stage comprises dampening and stirred debranning.

2. The process for producing rice from paddy according to claim 1, **characterized in that** said dampening uses a dampener to add water accounting for 0.5-2.5% of weight of brown rice into the brown rice, with water temperature being of 10-60°C, after dampening, the brown rice is conveyed to a stirred debranning stage within 10 minutes to be processed, wherein height of the brown rice is controlled at 0.3-2m during the stirred debranning stage.

3. The process for producing rice from paddy according to claim 1 or 2, **characterized in that** a stirrer is employed for stirred debranning, wherein linear velocity of stirrer rod controlled at 1-6m/s.

4. The process for producing rice from paddy according to claim 3, **characterized in that** repeating times of said stirred debranning stage is 1-4, after each time of stirred debranning the scraped bran coating is removed by winnowing or screening.

5. The process for producing rice from paddy according to claim 1, **characterized in that** a process flow is pre-cleaning → winnowing → entering raw-paddy bin → re-cleaning → magnetic separation → de-stoning → entering cleaned paddy bin → husking → paddy-husk separation → paddy-brown rice separation → brown rice → dampening → stirred debranning → winnowing or screening → white rice grading → entering finished product bin.

6. A device for actualizing said process according to claim 1, **characterized in that** the device includes following sequentially connected elements: a pre-cleaning screen, a first vertical suction duct, a first suction winnower, a raw-paddy bin, an oscillating screen, a second vertical suction duct, a magnetic separator, a de-stoner, a cleaned paddy bin, a husking, a paddy-husk separator, a paddy-brown rice separating screen, a spray dampener, a stirring debranner, a second suction winnower, a white rice grader and a finished product bin; wherein upper ports of the first vertical suction duct, the first suction winnower, the second vertical suction duct and the de-stoner are all connected with a first wind net device; upper port of the paddy-husk separator is connected to a second wind net device, upper port of the second suction winnower is connected to a bran-chip separator, upper port of the bran-chip separator is connected to a third wind net device; each of said first, second and third wind net devices comprises a fan blower, a centrifugal dust collector and a tripper.

7. The device according to claim 6, **characterized in that** 1 to 4 units of said stirring debranner and said second suction winnower can be added according to the actual situation of the production line.
